# FASCICULE DE BREVET EUROPEEN

(11) **EP 0 800 565 B1**
(45) Date de publication et mention de la délivrance du brevet: **15.03.2000**
(21) Numéro de dépôt: 95943265.9
(22) Date de dépôt: 22.12.1995
(51) Int. Cl.: C10G 9/16

(54) **INSTALLATION ET PROCEDE DE VAPOCRAQUAGE A INJECTION CONTROLEE DE PARTICULES SOLIDES DANS UN ECHANGEUR DE TREMPE**
DAMPFKRACK-EINRICHTUNG UND -VERFAHREN MIT KONTROLLIERTER INJEKTION VON FESTEN TEILCHEN IN EINEM ABSCHRECK-AUSTAUSCHER
STEAM CRACKING METHOD AND PLANT USING CONTROLLED INJECTION OF SOLID PARTICLES INTO A QUENCHING EXCHANGER

(30) Priorité: 26.12.1994 FR 9415744
(43) Date de publication de la demande: 15.10.1997
(73) Titulaire: INSTITUT FRANCAIS DU PETROLE, 92506 Rueil-Malmaison Cédex (FR); PROCEDES PETROLIERS ET PETROCHIMIQUES, 92502 Rueil-Malmaison (FR); Lenglet, Eric, 78170 La Celle-Saint-Cloud (FR)
(72) Inventeur: LENGLET, Eric, F-78170 La Celle-Saint-Cloud (FR); BROUTIN, Paul, F-69630 Chaponost (FR); BURZYNSKI, Jean-Pierre, F-69110 Sainte-Foy-lès-Lyon (FR); CAZOR, Hervé, F-38200 Vienne (FR); HUIN, Roland, F-78360 Montesson-la-Borde (FR)
(74) Mandataire: Andreeff, François
(86) Numéro de dépôt international: FR9501721
(87) Numéro de publication internationale: WO9620259

(56) Documents cités:
- WO-A-90/12851
- FR-A- 1 433 702

## Description

L'invention concerne une installation de vapocraquage d'hydrocarbures et un procédé de mise en oeuvre, comportant une étape de décokage à injection contrôlée de particules solides.

L'arrière plan technologique est illustré par le brevet FR-A-1.433.702.

Le procédé de vapocraquage est le procédé de base de l'industrie pétrochimique et consiste à craquer à haute température puis à refroidir brutalement une charge d'hydrocarbures et de vapeur d'eau. Le principal problème opératoire résulte du dépôt de produits carbonés sur les parois internes de l'installation. Ces dépôts, constitués de coke ou de goudrons lourds de pyrolyse condensés et plus ou moins agglomérés limitent le transfert thermique dans la zone de craquage (serpentin à tubes de pyrolyse) et la zone de trempe indirecte (échangeur de trempe des effluents), nécessitant des arrêts fréquents pour décoker l'installation.

Les demandeurs ont proposé (EP-A-419 643, EP-A-425 633 et EP-A-447 527) un procédé de décokage en marche d'installations de vapocraquage par injection de particules solides érosives, pour s'affranchir des problèmes de cokage et obtenir un vapocraquage continu ou sensiblement continu (par exemple durées de cycle de l'ordre d'un an).

Les particules solides érosives peuvent être injectées en amont de la zone de craquage de chaque four afin qu'elles décapent le coke déposé dans les tubes de pyrolyse, puis en aval, celui des échangeurs de trempe des effluents.

On réalise les injections en ligne c'est-à-dire soit, de préférence, pendant le fonctionnement normal du four, soit pendant des périodes où l'on interrompt brièvement l'alimentation en hydrocarbures, le four étant alors balayé par un débit de vapeur d'eau et restant relié aux sections aval de l'installation (four primaire, compression des gaz craqués, etc.). Ce passage sous vapeur, en l'absence d'oxygène peut également être utilisé pour le décokage à la vapeur des tubes du four, lorsqu'il est réalisé pendant des durées plus longues.

Pour réaliser dans une installation de vapocraquage existante, prévue pour le craquage du naphta, un vapocraquage flexible, compatible avec l'utilisation de charges lourdes (gasoil, distillat sous vide), on a trouvé qu'il était essentiel de bien décaper le coke déposé dans les échangeurs de trempe des effluents, et qu'un décokage en marche de ces échangeurs de trempe permettait, de manière inattendue, de pouvoir rendre une installation de vapocraquage existante, compatible avec une très grande variété de charges. On a également trouvé, de manière inattendue que le coke déposé dans les échangeurs de trempe était beaucoup plus facile à éliminer par érosion que le coke disposé dans les tubes de pyrolyse et que le procédé proposé antérieurement de décokage complet de l'installation par de fines particules érosives était très difficile à mettre en oeuvre de manière fiable avec un fonctionnement flexible sous des conditions nécessairement variables : la géométrie des tubes de pyrolyse ne peut en effet être adaptée pour l'ensemble des charges, pour assurer une correspondance entre l'intensité érosive locale et la vitesse de cokage locale (la nature du coke et sa dureté pouvant par ailleurs varier très fortement d'une charge à l'autre) ; d'autre part, en fonctionnement flexible, donc en régime variable de conditions opératoires, type de charge et taux de dilution, la perte de charge et la température de peau des tubes ne sont plus des indicateurs fiables de l'état de cokage d'un faisceau de tubes de pyrolyse qui ne peut donc être connu et contrôlé en temps réel.

Pour remédier à ces inconvénients, on propose un nouveau procédé associant un décokage chimique, au moins prépondérant, des tubes de pyrolyse à un décokage érosif, au moins prépondérant, des échangeurs de trempe. Ce procédé comporte donc un décokage érosif des tubes des échangeurs de trempe, qui requiert des moyens adaptés d'introduction des particules érosives dans ces échangeurs.

Pour la majeure partie des installations, ces échangeurs de trempe (TLE) sont de type multitubulaire avec une plaque tubulaire d'entrée pouvant comporter par exemple de 50 à 100 tubes de circulation des gaz craqués, chaque tube étant refroidi, le plus souvent, par circulation d'eau sous pression dans un espace annulaire autour de ce tube.

Chaque échangeur comprend un "cône d'entrée" de géométrie évolutive relié au conduit de transfert des gaz craqués, lui-même relié aux tubes de pyrolyse de la zone de craquage amont correspondante.

Le problème technique pour lequel il a été trouvé une solution objet de l'invention concerne la distribution des particules dans les différents tubes de l'échangeur.

Le procédé ne nécessite pas une répartition strictement égale des quantités de particules dans chaque tube mais on recherche des écarts de répartition relativement réduits, et il faut en particulier éviter que l'un des tubes ne recueille par exemple 10 %, ou bien au contraire 10 fois plus de particules que la valeur moyenne. En effet, un tube mal alimenté en particules érosives pourra se boucher, du fait d'un décokage insuffisant, alors qu'un tube suralimenté risquerait d'être érodé par les particules en quantité excessive.

La distribution des particules doit par ailleurs être réalisée sans provoquer d'érosion notable de la plaque tubulaire de l'échangeur.

Ce problème technique est rendu beaucoup plus délicat par plusieurs éléments et contraintes de procédé :
1) les très hautes températures (typiquement 850°C) à l'entrée des échangeurs TLE.
2) le cokage intense dans cette zone, avec des risques de bouchage des conduits d'arrivée de particules.
3) les très grandes vitesses de circulation, et turbulences dans cette zone (typiquement 100 m/s et plus).
4) la possibilité d'impact de fragments massifs de coke détachés des parois en amont, et
5) la relative fragilité de la plaque tubulaire d'entrée des TLE, d'épaisseur généralement voisine de 10 mm seulement, vis à vis des problèmes d'érosion.

Le dispositif d'introduction et de répartition des particules doit donc à la fois être :
- robuste pour résister aux hautes températures, aux risques de chocs et d'érosion,
- fiable, notamment vis à vis des problèmes de bouchage par le coke,
- performant du point de vue répartition, dans des conditions locales de haute turbulence, et
- ne pas présentant de risques d'érosion élevés pour la plaque tubulaire.

On connaît déjà des techniques pour injecter et répartir des solides en poudre ou des liquides atomisés dans un échangeur multitubulaire.

Ces techniques consistent à réaliser une injection multipoints, par des rampes d'injection, pour répartir les solides ou les liquides directement en face des tubes de l'échangeur. Ces injections sont avantageusement réalisées avec un nombre de points importants (par exemple 15 ou 20) ou même en nombre égal à celui des tubes de l'échangeur) pour améliorer la distribution.

Les rampes d'injection sont des conduits généralement droits ou circulaires, comportant des buses ou orifices d'injection.

Cette solution connue a été expérimentée pour l'application considérée, et rapidement abandonnée pour des raisons multiples :
- déformation des rampes, trop fragiles,
- bouchages successifs d'injection de nombreux points par du coke, probablement du fait des perturbations aérodynamiques entre les différents points d'injection dues aux turbulences et recirculations intenses dans le cône d'entrée de l'échangeur; ces turbulences peuvent en effet provoquer l'arrêt du débit de certains points d'injection et leur bouchage.

Le problème technique est en fait très difficile à résoudre car les contraintes sont apparemment contradictoires :

Si l'on veut répartir de manière sensiblement égale les particules, il est logique de faire une injection avec une répartition spatiale multi-points, avec un grand nombre de points, ce qui présente des risques de bouchage.

Si l'on utilise un petit nombre de points d'injection, on disposera ceux-ci notablement en amont (par exemple à 50 fois le diamètre du conduit), pour que les particules aient le temps de se distribuer correctement dans le gaz. Dans ce cas, les vitesses des particules sont élevées, car les particules ont le temps d'être fortement accélérées par la circulation du gaz à grande vitesse, et l'on a des risques d'érosion de la plaque tubulaire.

Si l'on rajoute un impacteur central en vis à vis du conduit de transfert, pour éviter l'impact direct des particules sur la plaque tubulaire, les particules contournent alors celui-ci à sa périphérie, et la répartition des particules dans les tubes en aval sera moins bonne.

Un des objets de l'invention est de remédier aux inconvénients de l'art antérieur et de répondre au problème technique mentionné ci-avant.

L'invention concerne donc une installation de vapocraquage d'hydrocarbures comportant au moins un four de craquage comportant au moins un four de craquage comprenant au moins une zone de craquage à au moins un tube de pyrolyse relié en aval par l'intermédiaire d'un conduit de transfert (1) à un cône d'entrée (2) d'un échangeur (3) de trempe des effluents de cette zone, du type multitubulaire à plaque tubulaire d'entrée (5), l'installation comprenant également au moins un conduit (I) d'injection de particules solides pour une élimination au moins partielle, effectuée en ligne, du coke déposé dans les tubes de l'échangeur, caractérisée en ce qu'elle comprend :
a) un impacteur-diffuseur (6), de particules, comportant des surfaces solides disposées en vis à vis du conduit (1 ) de transfert, à l'intérieur du dit cône (2) d'entrée, ledit impacteur-diffuseur étant perméable aux gaz selon une pluralité de passages de gaz, mais opaque au moins à 70 % vu du dit conduit de transfert (1) situé en amont,
b) ledit conduit (I) d'injection débouchant en un point d'introduction des particules disposé à une distance L en amont de l'impacteur-diffuseur n'excédant pas 2,5 fois le diamètre D de la plaque tubulaire de l'échangeur de trempe.

Par cône d'entrée, on entend une zone de transition de section sensiblement croissante, de forme généralement au moins en partie tronconique, raccordée en amont au conduit de transfert des gaz craqués en provenance des tubes de pyrolyse, ce conduit étant de section cylindrique, et en aval à la plaque tubulaire de l'échangeur de trempe. Ce cône peut aussi être évasé "en trompette", comme le montrent des figures ci-après.

Ce terme de "cône" de l'échangeur, bien connu de l'homme de l'art, peut en fait recouvrir diverses géométries permettant de passer du conduit de transfert cylindrique (ou parfois de deux conduits) au diamètre beaucoup plus important de la plaque tubulaire de l'échangeur (de l'ordre typiquement de 1 m).

Par injection de particules "en ligne", on entend des injections de particules pendant le fonctionnement du vapocraquage (cas général), ou éventuellement des injections pendant des phases de courte durée, inférieures à 2 heures et de préférence 0,5 heure, de circulation de vapeur d'eau seule, l'alimentation en hydrocarbures étant interrompue. Cette possibilité peut être utilisée lorsque l'on craque des charges particulièrement lourdes, en récupérant les particules, et que l'on veut supprimer tout risque de condensations de goudrons sur les particules récupérées, les rendant collantes, et rendant l'installation non opérable.

Dans tous les cas d'injection en ligne, on ne déconnecte pas le four des sections aval (trempe directe, compression, fractionnement...).

Le terme d'impacteur-diffuseur désigne un corps solide, généralement métallique situé sur la trajectoire de l'écoulement et pouvant dévier les gaz selon plusieurs directions, et obtenir l'impact direct, sur lui-même, d'une partie importante des particules solides incidentes véhiculées par les gaz, afin d'éviter l'impact direct de ces particules sur la plaque tubulaire disposée en aval.

Par impacteur-diffuseur, opaque au moins à 70 %, on entend un impacteur-diffuseur sur lequel 70 % au moins des lignes de courant du conduit de transfert, parallèles à l'axe de ce conduit rencontrent l'impacteur.

En d'autres termes, la surface projetée des divers éléments de l'impacteur-diffuseur, sur la section du conduit de transfert représente 70 % au moins de cette section. (La section du conduit est la surface délimitée par le cercle correspondant au diamètre intérieur du conduit cylindrique, juste en amont du cône, la surface étant projetée parallèlement à l'axe du conduit).

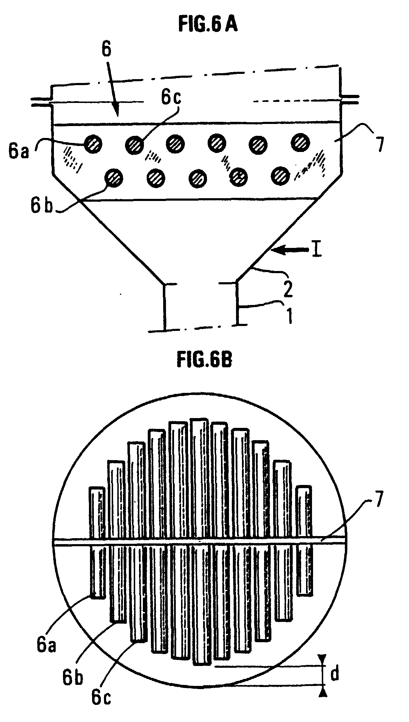

Les passages des gaz peuvent être non communicants ou communicants, par exemple à des extrémités de surfaces solides qui constituent l'impacteur diffuseur, comme il sera décrit à la figure 6.

Cette installation comprend de très nombreux avantages par rapport aux techniques antérieures :
1) L'impacteur-diffuseur a une fonction de brise-jet du fait de sa position et de sa perméabilité partielle aux gaz, selon une pluralité de passages de gaz. Il y a donc éclatement du courant principal en une pluralité de courants secondaires. Ces courants, ou jets secondaires ont tendance à se disperser et à s'affaiblir beaucoup plus rapidement qu'un jet central unique dont la puissance est beaucoup plus importante ; de plus ces jets ne rencontrent pas, de façon générale, la plaque tubulaire au même endroit. Cet effet brise-jet limite donc efficacement les risques d'érosion.
2) L'impacteur-diffuseur a une deuxième fonction de protection de la plaque tubulaire aval : comme il est opaque à 70 % minimum vis à vis des lignes de courant de l'écoulement amont, il évite donc l'impact direct de la majeure partie des particules incidentes sur la plaque tubulaire.
3) II a enfin une fonction de diffuseur (c'est-à-dire de répartition des particules : en effet les particules qui entrent en contact avec les surfaces de l'impacteur rebondissent mais de manière non égale, en fonction de leur masse, de l'angle d'incidence notamment et sont alors véhiculées par les jets gazeux secondaires (effet de brise-jet de l'impacteur), dans plusieurs directions.

Comme, d'autre part, les injecteurs sont disposés à une distance réduite en amont de l'impacteur-diffuseur, les jets de particules (qui ne se mélangent pas instantanément avec les gaz craqués) ne sont que très partiellement accélérés ou dispersés au moment de leur arrivée au niveau de l'impacteur-diffuseur. Ces jets, mal répartis dans les gaz craqués, arrivent donc à vitesse relativement lente, rebondissent, "éclatent" sur l'impacteur-diffuseur et se dispersent dans les différents espaces libres de l'impacteur-diffuseur.

Cette vitesse relativement lente des jets de particules solides a deux conséquences au niveau des risques d'érosion :
- l'érosion de l'impacteur est minimisée,
- l'érosion de la plaque tubulaire par la fraction mineure des particules qui ne rebondit pas sur l'impacteur, mais le traverse directement est également minimisée. De plus, la dispersion des particules par les courants ou jets gazeux secondaires (il y a en fait une double diffusion : celle des gaz, directe et celle des particules, après rebond) améliore la répartition spatiale des particules, dans les différents tubes de l'échangeur.

Par ailleurs, comme les injecteurs ne réalisent pas par eux-mêmes la fonction de distribution spatiale des points d'injection, ils n'ont pas besoin d'être pénétrants dans le cône, ce qui limite considérablement leur fragilité mécanique et les risques de déformation.

Comme, enfin, les impacteurs peuvent être disposés tous de manière identique (pas de répartition "spatiale") il n'y a pas d'effet aérodynamique provoquant des distorsions de pression aval entre les différents injecteurs, ce qui limite considérablement les risques de bouchage.

De préférence, la distance L des extrêmités des injecteurs en amont de l'impacteur-diffuseur est comprise entre 0,1 x D et 1,0 x D (D étant le diamètre de la plaque tubulaire), et de préférence entre 0,15 x D et 0,8 x D.

Ces limitations de L permettent de réduire encore l'énergie cinétique des particules au niveau de l'impacteur-diffuseur.

De façon préférée, l'impacteur-diffuseur est opaque à au moins 90 %, ou sensiblement 100 % opaque, vu du conduit de transfert, ce qui limite ou annule sensiblement la quantité de particules traversant l'impacteur sans rebondir, être freinées et dispersées.

Le nombre de conduits d'injection est avantageusement compris entre 1 et 8, en particulier et de préférence entre 2 et 6 (bornes comprises) : en effet, du fait du rôle de dispersion spatiale des particules joué par l'impacteur-diffuseur, il n'y a pas besoin d'assurer une dispersion spatiale importante par un très grand nombre de points d'injection.

De même, il n'y a pas besoin d'utiliser des conduits d'injection comportant des embouts pénétrant l'écoulement des gaz craqués. Ainsi, on prévoit que les extrémités des conduits d'injection sont situées sensiblement au niveau de la surface interne de l'ensemble formé par le conduit de transfert et le cône d'entrée. De façon préférée, les extrémités de ces conduits d'injection sont situés dans la zone du cône d'entrée de l'échangeur, et en particulier affleurent au niveau de la surface interne de ce cône d'entrée. L'utilisation de points d'injection dans la zone du cône d'entrée rapproche ces points d'injection de l'impacteur-diffuseur, ce qui est favorable du point de vue protection contre l'érosion.

Du fait du nombre limité de points d'injection, les extrémités des conduits d'injection peuvent être avantageusement situées à un même niveau, dans le sens de l'écoulement des effluents, par exemple à un même niveau de la surface interne du cône d'entrée.

Ceci réduit les disparités aérodynamiques au niveau des points d'injection et limite fortement les risques de bouchage de certains points d'injection par des dépôts de coke.

Généralement, les cônes d'entrée des échangeurs de trempe (TLE) comportent, côté amont, une partie du cône de surface interne tronconique d'angle au sommet (global) inférieur ou égal à 20°, et de préférence à 15° et typiquement voisin de 10°.

Selon une disposition caractéristique préférée de l'invention, les conduits d'injection de particules débouchent au niveau de cette zone de ralentissement, en particulier dans la seconde moitié aval de cette zone. De cette façon, la mise en vitesse des particules est réduite puisque les gaz craqués sont déjà ralentis, ou amorcent leur ralentissement immédiatement en aval des point d'injection.

Il est d'ailleurs particulièrement intéressant que les points d'injection soient situés à un niveau où la section de passage de l'écoulement est augmentée d'au moins 25 %, et de préférence entre 40 et 400 % , par rapport à la section de passage de la partie terminale du conduit de transfert en amont de l'échangeur de trempe.

Ces injections, en des points très en aval, à vitesse ralentie de l'écoulement de gaz craqués, ce qui est en principe défavorable à la distribution et la bonne répartition des particules dans les tubes de l'échangeur, est rendue possible par l'action multifonctionnelle de l'impacteur-diffuseur : protection contre l'érosion, diffusion directe des gaz, diffusion des particules après rebond, du fait de l'opacité élevée de cet impacteur-diffuseur et de sa perméabilité.

La perméabilité de l'impacteur-diffuseur peut être définie comme la fraction de vide minimale obtenue en projetant les diverses sections de cet impacteur-diffuseur, perpendiculairement à l'axe du cône, sur la section du conduit de transfert. Avantageusement cette porosité sera d'au moins 30 %, et de préférence comprise entre 40 et 60 %.

Selon une variante caractéristique, l'impacteur-diffuseur peut comprendre des surfaces solides et des espaces vides, disposées selon deux niveaux au moins dans le sens de l'écoulement des effluents, les espaces vides à l'un des deux niveaux étant sensiblement en vis à vis des surfaces solides à l'autre niveau.

Cet arrangement, qui sera plus explicite à l'examen des figures, permet d'avoir à la fois une opacité élevée et une perméabilité élevée, ce qui est favorable vis à vis du problème technique de prévention de l'érosion (opacité) et de répartition des particules améliorée par une perméabilité correcte.

L'impacteur pourra être constitué de disques ou d'anneaux toriques de section sensiblement circulaire, rectangulaire ou carrée, pouvant être reliés mécaniquement entre eux, ainsi qu'au cône d'entrée de l'échangeur, par des pattes de fixation, ou un équivalent technique, compatible avec les problèmes de dilatation.

Selon une autre variante, l'impacteur diffuseur peut comporter une pluralité de barreaux rectilignes, de section rectangulaire, carrée ou de préférence circulaire, sensiblement parallèles et disposés selon au moins un niveau, de préférence selon deux niveaux.

Selon une variante particulièrement avantageuse de l'invention, les barreaux sont supportés par une entretoise unique, centrale et sensiblement perpendiculaire à l'axe de ces barreaux. L'extrémité des barreaux est avantageusement située à une distance d du cône d'au moins 30 mm et de préférence d'au moins 50 mm. Cela permet une évacuation de fragments de coke provenant d'un écaillage dans le four ou dans les tubes de pyrolyse, en amont, dans l'espace sensiblement annulaire autour de l'impacteur. On empêche ainsi toute obstruction de l'impacteur par des fragments de coke.

Si l'on avait deux entretoises, le risque d'obstruction serait notablement accru dans la zone comprise entre ces entretoises, les fragments étant empêchés de glisser vers l'extérieur.

L'invention propose également un procédé de vapocraquage, pouvant être mis en oeuvre dans l'une des installations précédemment décrites, caractérisé en ce que l'on introduit des gaz craqués effluents d'une zone de vapocraquage, par l'intermédiaire d'un conduit de transfert, évasée d'angle au sommet inférieur ou égal à 20°, en amont de la plaque tubulaire d'un échangeur de trempe, de façon à réduire la vitesse de ces gaz à une valeur comprise entre 0,07 et 0,7 fois leur vitesse dans la partie terminale du conduit de transfert, en ce que l'on injecte dans ces gaz dont la vitesse est réduite, des particules solides érosives, de manière discontinue, à une distance L en amont d'un impacteur-diffuseur, L étant d'au plus 1 mètre et n'excédant par 2,5 fois le diamètre D de la plaque tubulaire, l'impacteur étant perméable aux gaz selon une pluralité de passages et la surface projetée des surfaces solides de l'impacteur-diffuseur sur la section du conduit de transfert représentant 70% au moins de ladite section, et en ce que l'on fait circuler le mélange de particules et de gaz craqués en aval de l'impacteur-diffuseur dans les tubes de l'échangeur de trempe, pour limiter son encrassement, les quantités de particules injectées étant suffisantes pour que la température de sortie de l'échangeur de trempe n'augmente pas de plus de 100°C par mois et de préférence 30°C par mois.

Ce procédé, selon l'invention, permet de flexibiliser de manière très importante une installation de vapocraquage prévue pour le naphta et de craquer par exemple des condensats, gazoles, ou distillats sous vide ; le contrôle du procédé (quantités de particules solides nécessaires) est très simple et découle de l'examen de la température de sortie de l'échangeur de trempe, qui renseigne de manière fiable sur son degré d'encrassement, même en régime flexible.

Les quantités de particules solides adéquates dépendent beaucoup des charges, conditions opératoires, et du choix des particules érosives. Généralement on injectera entre 20 et 3000 ppm, notamment entre 20 et 1500 ppm de particules de solides (valeur pondérale moyenne par rapport aux gaz craqués sur un cycle de vapocraquage).

Le débit instantané pourra être, au moment des injections, compris entre 0,5 et 25 % poids par rapport aux gaz craqués, notamment entre 1 et 10 %.

Les particules adéquates sont typiquement des particules de diamètre moyen (au point 50 % poids) compris entre 0,02 et 4 mm, notamment entre 0,07 et 0,8 mm.

De préférence, au moins en partie, angulaires (par exemple au moins 20 %), elles peuvent être constituées principalement de matériaux du groupe formé par le coke stabilisé (en particulier du coke ayant été calciné à 850°C minimum), le carbure de silicium, et les oxydes simples ou mixtes du silicium, de l'aluminium et du zirconium.

L'invention sera mieux comprise au vu des figures suivantes illustrant de manière schématique l'installation, et divers modes de réalisation selon l'invention, parmi lesquelles :

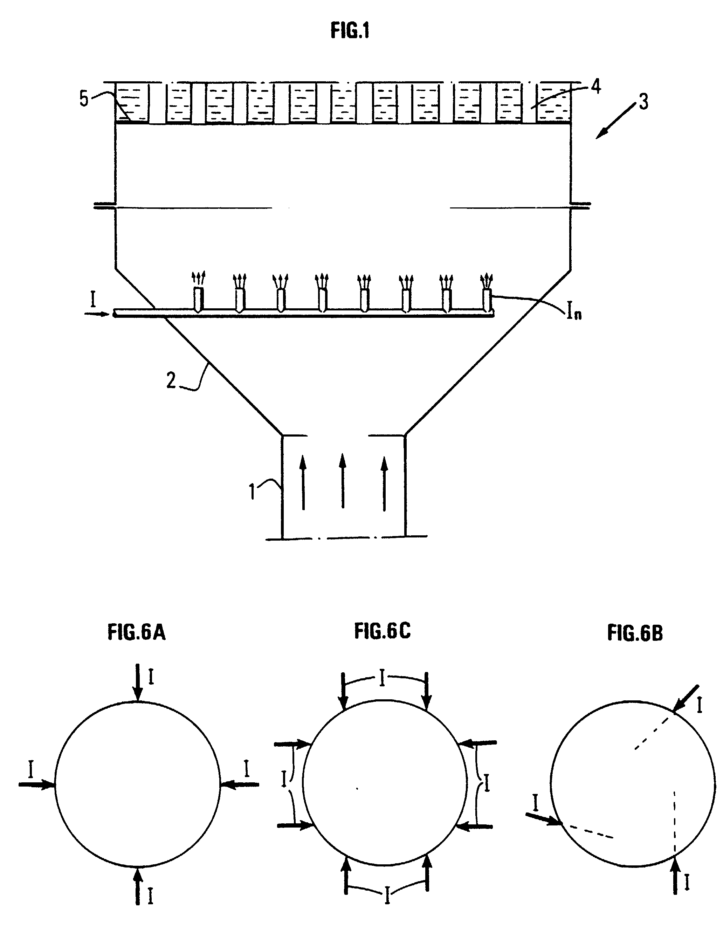

La figure 1 représente une alimentation en particules, selon un mode connu de l'art antérieur, avec une distribution spatiale multi-points.

Selon la figure 1, un échangeur de trempe indirecte (3) des effluents de vapocraquage provenant d'une zone de craquage à tubes de pyrolyse, non représentée, est relié à cette zone par un conduit de transfert (1), débouchant dans le cône d'entrée (2) de l'échangeur. Cet échangeur est du type multitubulaire et comporte une pluralité de tubes (4) de circulation des gaz craqués pour leur refroidissement brusque, raccordés à une plaque tubulaire (5).

Classiquement, pour distribuer des particules et les répartir, on utilise des rampes d'injection (I), dont une seule est représentée, avec une pluralité de points d'injection (In) pour réaliser la répartition spatiale des particules.

Le grand nombre de points In, et les conditions thermiques, aérodynamiques, et chimiques (cokage), sont très défavorables pour ce dispositif, et provoquent notamment des problèmes de bouchage et de déformation des rampes.

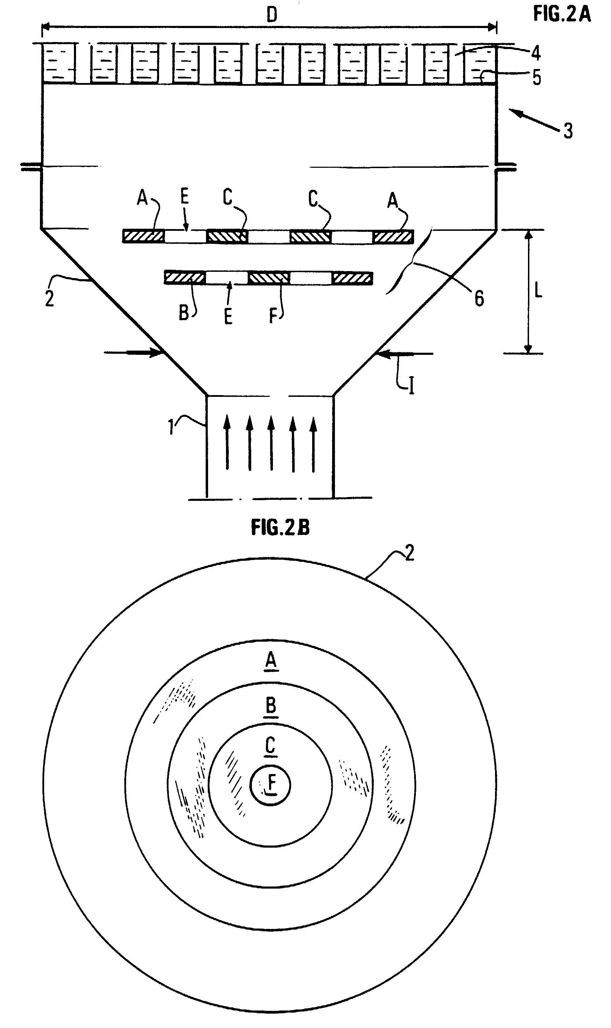

La figure 2 représente la partie caractéristique d'une installation selon l'invention : des injecteurs (I), en nombre restreint (1 à 8 et de préférence 2 à 6) permettent d'injecter des particules à un même niveau du cône (2) de l'échangeur de trempe. Les conduits d'injection (I) débouchent aux points d'injection, sur la surface interne du cône (2), juste en amont d'un impacteur-diffuseur, comprenant une pluralité de surfaces (A, B, C, F), ainsi que des espaces vides (E) formant plusieurs passages de gaz. Cet impacteur-diffuseur est situé en vis à vis du conduit de transfert (1), en aval des lignes de courant de ce conduit de transfert, symbolisées par des flèches.

A l'examen de la figure 2, on voit que si l'on prolonge les flèches situés dans le conduit de transfert (1), ces flèches rencontrent au moins l'une des surfaces solides A, B, C, F. Cet impacteur-diffuseur (6) est donc opaque à 100 % vu du conduit de transfert (1). Il est néanmoins perméable aux gaz grâce aux espaces vides (E) formant une pluralité de passages de gaz. Avantageusement, on utilisera un impacteur-diffuseur comportant un plus grand nombre de surfaces solides (par exemple entre 8 et 20), et de passages de gaz (E), qu'il n'est représenté sur la figure 2.

La figure 2A illustre schématiquement une vue de dessus des surfaces ABCF de l'impacteur-diffuseur vue de la plaque tubulaire (5).

Conformément à l'invention, les points d'injection, situés aux extrémités des conduits d'injection (I) sont disposés à une distance réduite L, en amont de l'impacteur-diffuseur (par définition, de position définie par les surfaces solides les plus en aval). Selon la figure, L est plus petite que le diamètre (D) de la plaque tubulaire (5) de l'échangeur.

Comme on le voit également, cet impacteur comprend deux niveaux de surfaces solides : A et C d'une part, et B et F d'autre part, les espaces vides (E) à l'un des niveaux étant sensiblement en vis à vis des surfaces solides de l'autre niveau.

A, B, C, F sont des anneaux toriques (A, B, C) ou un disque (F), de section rectangulaire ; ils peuvent être réalisés en alliage réfractaire (par exemple HK 40), et raccordés entre eux et au cône (2) par des pattes de fixation, ou autres dispositifs mécaniques non représentés.

L'angle total du cône au niveau des piquages des conduits (I) est de préférence inférieur à 20° et généralement voisin de 10°, ce qui n'est pas représenté sur la figure, pour de simples raisons de dessin.

Les injecteurs (I) peuvent être disposés perpendiculairement à l'axe du cône (selon la figure), ou bien inclinés vers l'amont ou même inclinés vers l'aval.

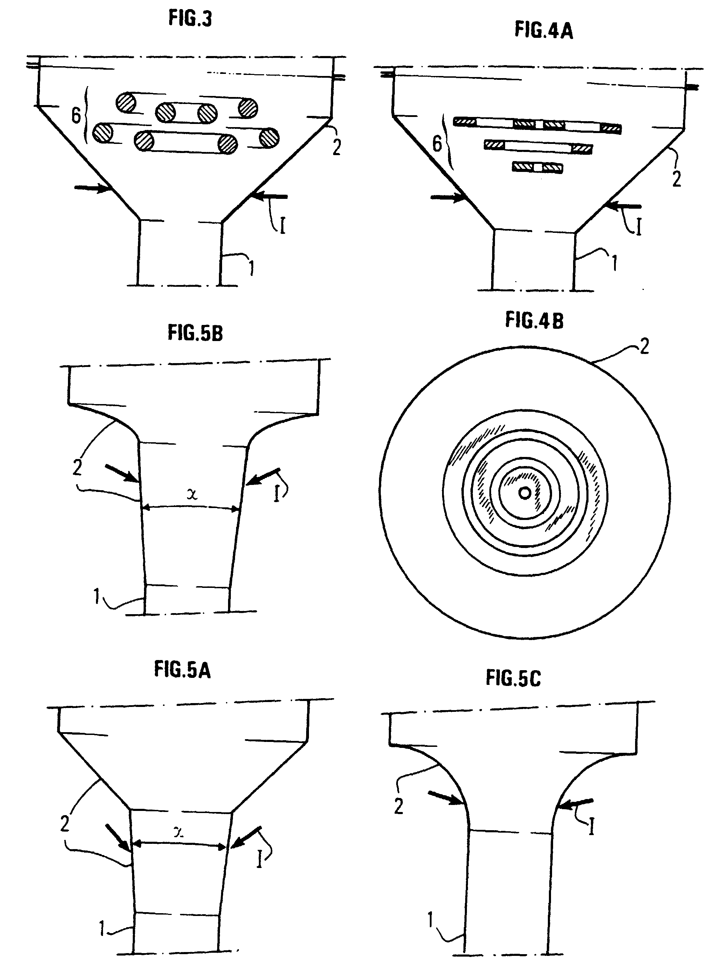

Les figures 3 et 4 (4A et 4B) représentent deux autres géométries d'impacteur, comportant des anneaux toriques de section circulaire pour la figure 3, et rectangulaire pour la figure 4A.

La figure 5 (figures 5A, 5B, 5C) présente divers modes possibles de réalisation du cône d'entrée, comportant une zone tronconique de ralentissement (figures 5A et 5B) d'angle total α ≤ 15°, ou bien sans zone de ralentissement, mais avec un profil "en trompette" (figure 5C). Les figures 5A et 5B montrent les canaux I débouchant dans la zone de ralentissement (dans sa seconde moitié aval). Les impacteurs-diffuseurs n'ont pas été représentés sur les figures 5A, B, C pour de simples raisons de dessin.

La figure 6 (figures 6 A, 6 B) illustre une autre variante d'impacteur diffuseur (6) comportant une pluralité de barreaux (6 a, 6 b, 6 c), rectilignes, de section circulaire, sensiblement parallèles et disposés selon deux niveaux. Ces barreaux sont supportés par une entretoise (7) unique centrale et sensiblement perpendiculaire à l'axe des barreaux. L'extrémité des barreaux est située à une distance d du cône d'au moins 30 mm.

Selon la figure 6 B, les projections des barreaux ne sont pas jointives, l'espace libre projeté étant au plus de 30 % de l'espace total vu du conduit. De préférence, utilisera un impacteur totalement opaque vu de dessus, les barreaux d'une rangée occupant les interstices de l'autre rangée.

L'installation selon l'invention fonctionne de la façon suivante : on réalise des injections continues ou de préférence discontinues de particules solides, séquentiellement pour chacun des échangeurs de trempe (ou fours, comportant plusieurs échangeurs de trempe). Les particules solides érosives sont véhiculées par transport pneumatique vers les conduites d'injection (I), par un gaz porteur tel que du fuel gaz, de l'azote, ou de la vapeur d'eau. Les particules peuvent être alimentées à partir d'un silo de particules neuves, ou au contraire être séparées en aval des échangeurs de trempe et, en partie au moins, recyclées. Le mode de transport pneumatique peut être un transport en phase dense, ou en phase diluée, en régime continu ou pulsé, et utiliser des moyens bien connus de l'homme de l'art, tels que des vannes, écluses, vis d'alimentation, aiguillage.

Les particules, injectées par les conduits (I) pénètrent dans le cône (2), mais ne sont pas instantanément dispersées par l'écoulement de gaz craqués. Le mélange non homogène gaz craqués/particules arrive au niveau de l'impacteur-diffuseur, où le gaz est diffusé par des passages (E) dans plusieurs directions ; la majorité (70 % ou 90 % ou 100 %) des particules rebondissent sur les surfaces solides de l'impacteur-diffuseur et sont elles-mêmes diffusées et dispersées secondairement à travers les passages (E), et autour de l'impacteur-diffuseur, et se répartissent de façon correcte dans les différents tubes (4) de l'échangeur.

Les quantités de particules qu'il est nécessaire d'injecter peuvent être déterminées facilement à partir de la température de sortie de l'échangeur de trempe dont on cherche à limiter la dérive à une valeur inférieure à 30°C par mois, par exemple.

L'invention est illustrée par l'exemple suivant :

Dans un échangeur (TLE) de capacité 10.000 kg/h de gaz craqués, on injecte toutes les 10 heures 50 kg de coke angulaire de granulométrie 150 à 300 micromètres en moyenne. La fréquence d'injection est ultérieurement modifiée (augmentée ou réduite) pour limiter la dérive de la température de sortie du TLE à 30°C par mois. La vitesse de circulation dans les conduits (I) (dans leur partie cylindrique, l'embouchure pouvant être évasée) est de 25 m/s.

Pour un impacteur-diffuseur pilote, sur maquette, comportant 2 niveaux de surfaces solides de section rectangle (comme à la figure 2), en fonction des particules utilisées et de la longueur L, variable entre 0,4 x D et 0,8 x D, on a obtenu une répartition correcte (écarts maximum variant de 9 à 21 % par rapport à la valeur moyenne), répondant au problème technique posé, et cela sans aucun bouchage ni aucune trace d'érosion de la plaque tubulaire.

L'invention permet donc de répondre favorablement à l'ensemble des spécifications du problème technique posé, contrairement aux dispositifs connus.

## Revendications

1. Installation de vapocraquage d'hydrocarbures comportant au moins un four de craquage comprenant au moins une zone de craquage à au moins un tube de pyrolyse relié en aval par l'intermédiaire d'un conduit de transfert (1) à un cône d'entrée (2) d'un échangeur (3) de trempe des effluents de cette zone, du type multitubulaire à plaque tubulaire d'entrée (5), l'installation comprenant également au moins un conduit (I) d'injection de particules solides pour une élimination au moins partielle, effectuée en ligne, du coke déposé dans les tubes de l'échangeur, caractérisée en ce qu'elle comprend :
a) un impacteur-diffuseur (6), de particules, comportant des surfaces solides disposées en vis à vis du conduit (1) de transfert, à l'intérieur du dit cône (2) d'entrée, ledit impacteur-diffuseur étant perméable aux gaz selon une pluralité de passages de gaz, et la surface projetée desdites surfaces solides de l'impacteur-diffuseur sur la section du conduit de transfert représentant 70% au moins de ladite section,
b) ledit conduit (I) d'injection débouchant en un point d'introduction des particules disposé à une distance L en amont de l'impacteur-diffuseur n'excédant pas 2,5 fois le diamètre D de la plaque tubulaire de l'échangeur de trempe.

2. Installation de vapocraquage selon la revendication 1, dans laquelle la distance L des extrémités des injecteurs en amont de l'impacteur-diffuseur est comprise entre 0,1 x D et 1,0 x D, D étant le diamètre de la plaque tubulaire et de préférence entre 0,15 x D et 0,8 x D.

3. Installation de vapocraquage selon l'une des revendications 1 et 2, dans laquelle l'impacteur-diffuseur est opaque à au moins 90 % environ, vu du conduit de transfert (1).

4. Installation de vapocraquage selon l'une des revendications 1 à 3, dans laquelle le nombre de conduits d'injection est compris entre 1 et 8 et de préférence entre 2 et 6 (bornes comprises).

5. Installation de vapocraquage, selon l'une des revendications 1 à 4, caractérisée en ce que les conduits d'injection I débouchent dans la zone du cône d'entrée de l'échangeur.

6. Installation selon l'une des revendications 1 à 5 caractérisée en ce que les points d'injection à l'extrémité des conduits d'injection, affleurent sensiblement au niveau de la surface interne de l'ensemble formé par le conduit de transfert (1) et le cône d'entrée (2), et de préférence au niveau de la surface interne du cône d'entrée de l'échangeur.

7. Installation selon l'une des revendications 1 à 6, caractérisée en ce que les extrémités des conduits d'injection sont situés à un même niveau, dans le sens de l'écoulement des effluents.

8. Installation de vapocraquage, selon l'une des revendications 1 à 7, comprenant une zone de ralentissement des effluents dans une partie du cône, de surface interne tronconique d'angle au sommet inférieur ou égal à 20°, dans laquelle les conduits d'injection débouchent.

9. Installation de vapocraquage selon la revendication 8, dans laquelle les conduits d'injection débouchent dans la seconde moitié aval de la zone de ralentissement d'angle au sommet inférieur ou égal à 20°.

10. Installation de vapocraquage selon l'une des revendications 1 à 9, dans laquelle les points d'injection sont situés à un niveau où la section de passage de l'écoulement est augmentée d'au moins 25 % par rapport à la section de passage de la partie terminale du conduit de transfert (1).

11. Installation de vapocraquage selon l'une des revendications 1 à 10, caractérisée en ce que l'impacteur-diffuseur comprend des surfaces solides et des espaces vides, disposés selon deux niveaux au moins dans le sens de l'écoulement des effluents, les espaces vides à l'un des deux niveaux étant sensiblement en vis à vis des surfaces solides à l'autre niveau.

12. Installation de vapocraquage selon l'une des revendications 1 à 11, dans laquelle l'impacteur-diffuseur est constitué de disques ou d'anneaux toriques de section sensiblement circulaire, rectangulaire ou carrée.

13. Installation de vapocraquage selon l'une des revendications 1 à 11, dans laquelle l'impacteur diffuseur comporte une pluralité de barreaux rectilignes, de section rectangulaire, carrée ou de préférence circulaire, sensiblement parallèles et disposés selon au moins un niveau, de préférence selon deux niveaux.

14. Installation de vapocraquage selon la revendication 13, dans laquelle les barreaux sont supportés par une entretoise unique, centrale et sensiblement perpendiculaire à l'axe des barreaux.

15. Procédé de vapocraquage d'hydrocarbures dans une installation de vapocraquage selon l'une des revendications 1 à 14, caractérisé en ce que l'on introduit des gaz craqués effluents d'une zone de vapocraquage, par l'intermédiaire d'un conduit de transfert (1), évasée d'angle au sommet inférieur ou égal à 20°, en amont de la plaque tubulaire d'un échangeur de trempe, de façon à réduire la vitesse de ces gaz à une valeur comprise entre 0,07 et 0,7 fois leur vitesse dans la partie terminale du conduit de transfert, en ce que l'on injecte dans ces gaz dont la vitesse est réduite, des particules solides érosives, de manière discontinue, à une distance L en amont d'un impacteur-diffuseur, L étant d'au plus 1 mètre et n'excédant par 2,5 fois le diamètre D de la plaque tubulaire, l'impacteur étant perméable aux gaz selon une pluralité de passages et la surface projetée des surfaces solides de l'impacteur-diffuseur sur la section du conduit de transfert représentant 70% au moins de ladite section, et en ce que l'on fait circuler le mélange de particules et de gaz craqués en aval de l'impacteur-diffuseur dans les tubes de l'échangeur de trempe, pour limiter son encrassement, les quantités de particules injectées étant suffisantes pour que la température de sortie de l'échangeur de trempe n'augmente pas de plus de 100°C par mois et de préférence 30°C par mois.

16. Procédé selon la revendication 15, caractérisé en ce que le débit instantané de particules au moment des injections est compris entre 0,5 et 25 % poids par rapport aux gaz craqués et en ce que les particules ont une dimension moyenne comprise entre 0,02 et 4 mm.

17. Procédé selon l'une des revendications 15 et 16, caractérisé en ce que les particules sont constituées principalement de matériaux du groupe formé par le coke, le carbure de silicium, et les oxydes simples ou mixtes du silicium, de l'aluminium et du zirconium, et sont au moins en partie angulaires.

## Patentansprüche

1. Vorrichtung zum Dampfcracken von Kohlenwasserstoffen, wenigstens einen Crackofen umfassend, der eine Crackzone mit wenigstens einem Pyrolyserohr aufweist, der stromabwärts über eine Transfertleitung (1) mit einem Eintrittskonus (2) eines Abschreckaustauschers (3) der Abströme aus dieser Zone verbunden ist, vom Mehrrohrtyp mit röhrenförmiger Eintrittsplatte (5), wobei die Installation ebenfalls wenigstens eine Leitung (I) zur Injektion von festen Partikeln für eine wenigstens teilweise in Reihe ausgeführte Eliminierung des Kokes umfaßt, der in den Rohren des Austauschers abgeschieden ist, dadurch gekennzeichnet, daß sie umfaßt:
a) einen Impinger-Diffuser (6) für Partikel, welcher feste, gegenüber der Transfertleitung (1) angeordnete Wandungen im Inneren dieses Eintrittskonus (2) umfaßt, wobei der Impinger-Diffuser permeabel für Gase gemäß einer Vielzahl von Gasdurchlässen ist und die projizierte Zone dieser festen Flächen des Impingers-Diffusers auf den Querschnitt der Transfertleitung wenigstens 70 % dieses Querschnitts ausmacht, und
b) wobei diese Injektionsleitung (I) an einem Einführpunkt der Partikel mündet, der unter einer Entfernung L vor dem Impinger-Diffuser angeordnet ist und den 2,5-fachen Durchmesser D der röhrenförmigen Platte des Abschreckaustauschers nicht überschreitet.

2. Dampfcrackvorrichtung nach Anspruch 1, bei der die Entfernung L der Enden der Injektoren vor dem Impinger-Diffuser zwischen 0,1 x D und 1,0 x D ausmacht, wobei D der Durchmesser der röhrenförmigen Platte ist und bevorzugt zwischen 0,15 x D und 0,8 x D liegt.

3. Dampfcrackvorrichtung nach einem der Ansprüche 1 und 2, bei dem der Impinger-Diffuser opak auf wenigstens 90 % etwa, von der Transfertleitung (1) aus gesehen, ist.

4. Dampfcrackvorrichtung nach einem der Ansprüche 1 bis 3, bei der die Anzahl der Injektionsleitungen zwischen 1 und 8 und bevorzugt zwischen 2 und 6 (Anschlüsse eingeschlossen) liegt.

5. Dampfcrackvorrichtung nach einem der Ansprüche 1 bis 4, dadurch gekennzeichnet, daß die Injektionsleitungen I in der Zone des Eintrittskonus des Wärmeaustauschers münden.

6. Vorrichtung nach einem der Ansprüche 1 bis 5, dadurch gekennzeichnet, daß die Injektionspunkte am Ende der Injektionsleitungen im wesentlichen in einer Ebene in Höhe der Innenfläche der Anordnung liegen, welche durch die Transfertleitung (1) und den Eintrittskonus (2) gebildet ist und bevorzugt in Höhe der Innenfläche des Eintrittskonus des Austauschers.

7. Vorrichtung nach einem der Ansprüche 1 bis 6, dadurch gekennzeichnet, daß die Enden der Injektionsleitungen auf ein und dem gleichen Niveau, in Strömungsrichtung der Abströme gesehen, sich befinden.

8. Dampfcrackvorrichtung nach einem der Ansprüche 1 bis 7, eine Zone zur Verlangsamung der Abströme in einem Teil des Konus umfassend, und zwar von einer kegelstumpfförmigen Innenfläche mit einem Spitzenwinkel, der kleiner oder gleich 20° ist, in welchem die Injektionsleitungen münden.

9. Dampfcrackvorrichtung nach Anspruch 8, bei der die Injektionsleitungen in die zweite abströmseitige Hälfte der Verlangsamungszone mit einem Spitzenwinkel von weniger oder gleich 20° münden.

10. Dampfcrackvorrichtung nach einem der Ansprüche 1 bis 9, bei der die Injektionspunkte auf einem Niveau sich befinden, wo der Strömungsdurchlaßquerschnitt um wenigstens 25 %, bezogen auf den Durchlaßquerschnitt des Endteils der Transfertleitung (1) erhöht ist.

11. Dampfcrackvorrichtung nach einem der Ansprüche 1 bis 10, dadurch gekennzeichnet, daß der Impinger-Diffuser feste Oberflächen und leere Räume umfaßt, die entsprechend wenigstens zwei Niveaus in Strömungsrichtung der Abströme angeordnet sind, wobei die leeren Räume auf einem der beiden Niveaus im wesentlichen den festen Flächen des anderen Niveaus gegenüberstehen.

12. Dampfcrackvorrichtung nach einem der Ansprüche 1 bis 11, bei der der Impinger-Diffuser gebildet wird aus Scheiben oder torischen Ringen von im wesentlichen kreisförmigem, rechteckigem oder quadratischem Querschnitt.

13. Dampfcrackvorrichtung nach einem der Ansprüche 1 bis 11, bei der der Impinger-Diffuser eine Vielzahl gradliniger Stäbe von rechtwinkligem, quadratischem oder bevorzugt kreisförmigem Querschnitt umfaßt, die im wesentlichen parallel verlaufen und gemäß wenigstens einem Niveau, bevorzugt gemäß zwei Niveaus, angeordnet sind.

14. Dampfcrackvorrichtung nach Anspruch 13, bei der die Stäbe durch ein einziges Zwischenstück, das zentral und im wesentlichen senkrecht zur Achse der Stäbe steht, getragen sind.

15. Verfahren zum Dampfcracken von Kohlenwasserstoffen in einer Dampfcrackvorrichtung nach einem der Ansprüche 1 bis 14, dadurch gekennzeichnet, daß man gecrackte abströmende Gase einer Dampfcrackzone vermittels einer Transfertleitung einführt, die um einen Spitzenwinkel kleiner oder gleich 20° vor der röhrenförmigen Platte eines Abschreckaustauschers aufgeweitet ist, derart, daß die Geschwindigkeit dieser Gase auf einen Wert zwischen 0,07 und 0,7 ihrer Geschwindigkeit im Endteil der Transfertleitung vermindert wird und daß man in diese Gase, deren Geschwindigkeit vermindert ist, erosive Partikel diskontinuierlich unter einem Abstand L vor einem Impinger-Diffuser injiziert, wobei L höchstens 1 Meter ist und das 2,5-fache des Durchmessers D der röhrenförmigen Platte nicht überschreitet, wobei der Impinger permeabel für Gase gemäß einer Vielzahl von Durchlässen ist und die projizierte Fläche der festen Flächen des Impinger-Diffusers auf den Querschnitt der Transfertleitung wenigstens 70 % dieses Querschnitts darstellt, und daß man das Gemisch aus Partikeln und gecrackten Gasen hinter dem Impinger-Diffuser in den Rohren des Abschreckwärmeaustauschers zirkulieren läßt, um seine Verschmutzung zu begrenzen, wobei die Mengen an injizierten Partikeln ausreichend sind, damit die Austrittstemperatur des Abschreckwärmeaustauschers nicht um mehr als 100°C pro Monat und bevorzugt 30°C pro Monat steigt.

16. Verfahren nach Anspruch 15, dadurch gekennzeichnet, daß der augenblickliche Durchsatz der Partikel im Augenblick der Injektionen zwischen 0,5 und 25 Gew.-%, bezogen auf die gecrackten Gase, beträgt und daß die Partikel eine mittlere Abmessung zwischen 0,02 und 4 mm haben.

17. Verfahren nach einem der Ansprüche 15 und 16, dadurch gekennzeichnet, daß die Partikel hauptsächlich gebildet sind aus Materialien der Gruppe, die gebildet ist durch Koks, Siliciumcarbid, und die einfachen oder gemischten Oxide des Siliciums, Aluminiums und des Zirkoniums und wenigstens zum Teil mit Spitzenwinkeln versehen sind.

## Claims

1. A facility for steam cracking of hydrocarbons comprising at least one cracking furnace provided with at least one cracking zone with at least one pyrolysis tube connected downstream by means of a transfer line (1) to an inlet cone (2) of a transfer line exchanger (3) for the effluent of this zone, of the multi-tube type with an inlet tube plate (5), the facility also comprising at least one injection line (I) for solid particles for at least partial removal, carried out in line, of the coke deposited in the exchanger tubes, characterised in that it comprises:
a) a particle impacter-diffuser (6), comprising solid surfaces disposed opposite the transfer line (1), in the interior of said inlet cone (2), said impacter-diffuser being permeable to gases via a plurality of gas passages, and the projected surface of the solid surfaces of the impacter-diffuser onto the cross-section of the transfer line representing at least 70% of said cross-section.
b) said injection line (I) opening out into a point of introduction of the particles, situated at a distance L upstream of the impacter-diffuser, not exceeding 2.5 times the diameter D of the tube plate of the transfer line exchanger.

2. A steam cracking facility according to claim 1, in which the distance L of the extremities of the injectors upstream of the impacter-diffuser is between 0.1 x D and 1.0 x D, D being the diameter of the tube plate, and preferably between 0.15 x D and 0.8 x D.

3. A steam cracking facility according to one of claims 1 and 2, in which the impacter-diffuser is at least approximately 90% opaque, viewed from the transfer line (1).

4. A steam cracking facility according to one of claims 1 to 3, in which the number of injection lines is between 1 and 8, and preferably between 2 and 6 (including boundaries).

5. A steam cracking facility according to one of claims 1 to 4, characterised in that the injection lines I open out into the zone of the inlet cone of the exchanger.

6. A facility according to one of claims 1 to 5, characterised in that the injection points at the extremity of the injection lines are substantially flush with the level of the internal surface of the assembly formed by the transfer line (1) and the inlet cone (2) and preferably at the level of the internal surface of the inlet cone of the exchanger.

7. A facility according to one of claims 1 to 6, characterised in that the extremities of the injection lines are located at the same level in the direction of flow of the effluent.

8. A steam cracking facility according to one of claims 1 to 7, comprising a zone for deceleration of the effluent in a part of the cone with a tapering internal surface with an angle to the highest point less than or equal to 20°, into which the injection lines open out.

9. A steam cracking facility according to claim 8, in which the injection lines open out into the second downstream half of the deceleration zone with an angle to the highest point less than or equal to 20°.

10. A steam cracking facility according to one of claims 1 to 9, in which the injection points are located at a level where the cross-section of the passage for the flow is increased by at least 25% with respect to the passage cross-section of the terminal part of the transfer line (1).

11. A steam cracking facility according to one of claims 1 to 10, characterised in that the impacter-diffuser comprises solid surfaces and voids, disposed on two levels at least in the direction of flow of the effluent, the voids on one of the two levels being substantially opposite the solid surfaces of the other level.

12. A steam cracking facility according to one of claims 1 to 11, in which the impacter-diffuser is constituted by discs or toroidal rings with a substantially circular, rectangular or square cross-section.

13. A steam cracking facility according to one of claims 1 to 11, in which the impacter-diffuser comprises a plurality of rectilinear bars with rectangular, square or preferably circular cross-section, substantially parallel and disposed at at least one level, preferably at two levels.

14. A steam cracking facility according to claim 13, in which the bars are supported by a single central brace, substantially perpendicular to the axis of the bars.

15. Process for steam cracking of hydrocarbons in a steam cracking facility according to one of claims 1 to 14, characterised in that effluent cracked gases from a steam cracking zone are introduced via a transfer line (1), tapered towards the highest point at an angle of less than or equal to 20°, upstream of the tube plate of a transfer line exchanger, such as to reduce the velocity of these gases to a value of between 0.07 and 0.7 times their velocity in the terminal part of the transfer line, in that erosive solid particles are injected in a discontinuous manner into these gases, the velocity of which is reduced, from a distance L upstream of an impacter-diffuser of at the most 1 metre and not exceeding 2.5 times the diameter D of the tube plate, the impacter being permeable to the gases via a plurality of passages and the surface of the solid surfaces of the impacter-diffuser projected onto the cross-section of the transfer line representing at least 70% of said cross-section, and in that the mixture of particles and cracked gases is circulated downstream of the impacter-diffuser in the tubes of the transfer line exchanger to limit its coking, the quantities of injected particles being sufficient for the outlet temperature of the transfer line exchanger not to increase by more than 100°C per month, and preferably 30°C per month.

16. A process according to claim 15, characterised in that the instantaneous delivery of particles at the moment of injection is between 0.5 and 25% by weight with respect to the cracked gases, and in that the particles have an average size of between 0.02 and 4 mm.

17. A process according to one of claims 15 and 16, characterised in that the particles are mainly constituted by materials from the group formed by coke, silicon carbide, simple or combined oxides of silicon, aluminium and zirconium and are at least partially angular.
